# EUROPEAN PATENT APPLICATION

(11) **EP 4 629 681 A1**
(43) Date of publication of application: **08.10.2025**
(21) Application number: 24190590.0
(22) Date of filing: 24.07.2024
(51) Int. Cl.: H04W 12/08, H04W 12/30, H04W 12/40, H04W 12/06

(54) **SECURE ELEMENT AND OPERATING METHOD**

(30) Priority: 04.04.2024 IN 202441027883
(71) Applicant: NXP B.V., 5656 AG Eindhoven (NL)
(72) Inventor: Caillaud, Cyril Harold, 5656AG Eindhoven (NL); Dharmaraj, Karthik, 5656AG Eindhoven (NL); Nitsch, Nils Frederik, 5656AG Eindhoven (NL)
(74) Representative: Krott, Michel

(57) **Abstract**

In accordance with a first aspect of the present disclosure, a secure element is provided, comprising: a storage unit configured to store a profile and to store export target information associated with said profile; an interface unit configured to receive a message from a target secure element; a processing unit operatively coupled to the storage unit and the interface unit, wherein said processing unit is configured to: verify whether data included in said message matches with the export target information; authorize an export of the profile to the target secure element if the data included in said message matches with the export target information. In accordance with further aspects of the present disclosure, a corresponding method of operating a secure element is conceived, and a computer program for carrying out said method is provided.

## Description

### TECHNICAL FIELD

The present disclosure relates to a secure element. Furthermore, the present disclosure relates to a corresponding method of operating a secure element, and to a computer program for carrying out said method.

### BACKGROUND

Some communication devices, such as smart phones, typically contain one or more secure elements. An example of such a secure element is a so-called embedded universal integrated circuit card (eUICC), which may be an embedded functional component that implements the same functionality as a traditional, removable subscriber identity module (SIM). Accordingly, a secure element may for example be a functional component (e.g., a component primarily implemented as software) that is installed in an embedded chip, more specifically in a tamper-resistant integrated circuit having a prescribed level of security. A secure element may implement security functions, such as cryptographic functions and authentication functions. Furthermore, a profile may be stored in a secure element, in order to enable the aforementioned functionality.

### SUMMARY

In accordance with a first aspect of the present disclosure, a secure element is provided, comprising: a storage unit configured to store a profile and to store export target information associated with said profile; an interface unit configured to receive a message from a target secure element; a processing unit operatively coupled to the storage unit and the interface unit, wherein said processing unit is configured to: verify whether data included in said message matches with the export target information; authorize an export of the profile to the target secure element if the data included in said message matches with the export target information.

In one or more embodiments, said message is a signed message, and the processing unit is further configured to: verify whether the message has been validly signed; authorize the export of the profile to the target secure element if the message has been validly signed and the data included in said message matches with the export target information.

In one or more embodiments, the export target information contains an identifier of the target secure element.

In one or more embodiments, the export target information contains a token provided by an owner of the profile.

In one or more embodiments, said token provided by the owner of the profile is a random number.

In one or more embodiments, the processing unit is further configured to delete the export target information from the storage unit.

In one or more embodiments, the processing unit is further configured to generate an export package containing said profile if the export has been authorized.

In one or more embodiments, the processing unit is further configured to generate feedback data indicative of a result of the export of the profile.

In one or more embodiments, the secure element is an embedded universal integrated circuit card (eUICC).

In one or more embodiments, a mobile communication device comprises a secure element of the kind set forth.

In one or more embodiments, the mobile communication device further comprises the target secure element.

In accordance with a second aspect of the present disclosure, a method of operating a secure element is conceived, comprising: storing, in a storage unit of the secure element, a profile and export target information associated with said profile; receiving, by an interface unit of the secure element, a message from a target secure element; verifying, by a processing unit of the secure element, whether data included in said message matches with the export target information; authorizing, by the processing unit, an export of the profile to the target secure element if the data included in said message matches with the export target information.

In one or more embodiments, the method further comprises: verifying, by the processing unit, whether the message has been validly signed; authorizing, by the processing unit, the export of the profile to the target secure element if the message has been validly signed and the data included in said message matches with the export target information.

In one or more embodiments, the export target information contains an identifier of the target secure element or a token provided by an owner of the profile.

In accordance with a third aspect of the present disclosure, a computer program is provided, comprising executable instructions which, when executed by a secure element, cause said secure element to carry out a method of the kind set forth.

### DESCRIPTION OF DRAWINGS

Embodiments will be described in more detail with reference to the appended drawings.
Fig. 1 shows an illustrative embodiment of a secure element.
Fig. 2 shows an illustrative embodiment of a method of operating a secure element.
Fig. 3 shows an illustrative embodiment of a provisioning process.
Fig. 4 shows an illustrative embodiment of an export process.

### DESCRIPTION OF EMBODIMENTS

Nowadays, removable SIMs are often replaced by so-called eUICCs. This fits into the trend of developing so-called embedded SIM (eSIM) technology, which transforms the traditional plastic SIM into an electronical dataset called "profile". A profile may be regarded as a collection of resources associated with a particular user. For example, a mobile network operator (MNO) may associate the profile with said user in its network and billing systems, upon contract establishment and when sending an eSIM, respectively. Specifically, a profile may include at least one of a file system, one or more network access credentials, one or more applications and data related to or operated upon by said applications. In operation, a communication device may for example retrieve access credentials contained in such a profile, with the purpose of connecting the communication device to a cellular network.

Instead of sending a SIM to a subscriber, eSIM allows an MNO to easily download and install a profile into a secure element (e.g., an eUICC) in a connected device (e.g., a mobile phone). However, once downloaded, the profile can typically not be extracted from the secure element. In other words, a transfer of the profile to a new communication device having another secure element is usually not envisaged. Currently, the GSM Association (GSMA) is investigating the possibility of securely exporting profiles from one secure element to another. In such a scenario, the question of how a profile owner (e.g., the aforementioned MNO) can have control on the export function should also be addressed.

The current security protocol defined by the GSMA for downloading and installing eSIM profiles is defined in a "one-way-street" principle. More specifically, once a profile has been delivered (which is encrypted for a single secure element only), the requirement is that the secure element will never expose any data from that profile unless needed and defined by the relevant telecommunication specifications (e.g., ETSI and 3GPP specifications). As a consequence, the scenario of removing a SIM from one device and put it into another device, and by that keeping all modifications done on the SIM so far, cannot be realized in an eSIM ecosystem. For this reason, a case study is performed on exporting profiles from secure elements of the kind set forth above. For example, it should become possible to transfer a snapshot of an eSIM profile from one eUICC to another eUICC, or to an intermediate secure storage in a server.

On traditional SIM cards confidential and/or secret data owned by the subscriber (e.g., privacy-related data) or by his or her business partner (e.g., identifiers and secret keys) are never readable outside the SIM cards. Therefore, the profile owner (e.g., the MNO) may always be confident that credentials and other secret data is never exposed outside the SIM. However, introducing the technical possibility of exporting a profile raises the question how the profile export procedure can ensure that only a specific (and authorized) recipient will receive the exported profile and that any attacker cannot intercept the profile export and abuse the exported profile.

Now discussed are a secure element and a corresponding method of operating a secure element, which facilitate exporting one or more profiles from the secure element to another secure element (referred to as a "target secure element"), with a reduced risk that said profiles are exposed to unauthorized parties.

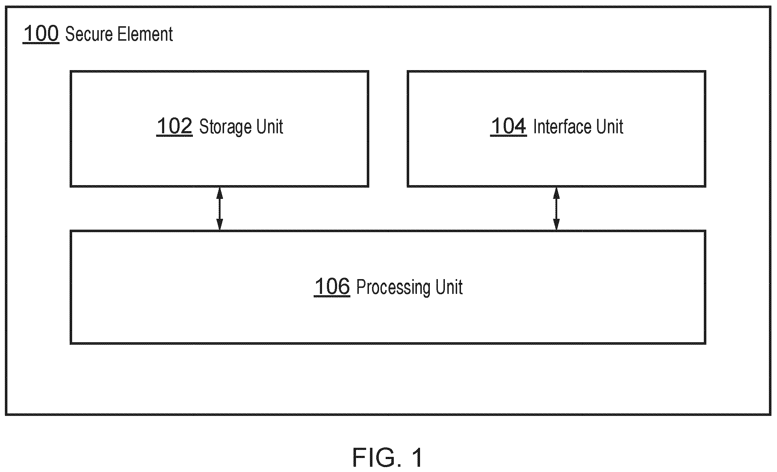

**Fig. 1** shows an illustrative embodiment of a secure element 100. The secure element 100 comprises a storage unit 102, an interface unit 104 and a processing unit 106. The storage unit 102 is configured to store a profile and to store export target information associated with said profile. Furthermore, the interface unit 104 is configured to receive a message from a target secure element (not shown), which is external to the secure element 100. Furthermore, the processing unit 106 is configured to verify whether data included in said message matches with the export target information, and to authorize an export of the profile to the target secure element if the data included in said message matches with the export target information. In this way, the risk that the profile is exposed to unauthorized parties is reduced. It is noted that the term "export target information" may refer to any kind of information that may be used to restrict the export of the profile to a specific target secure element. Furthermore, it is noted that the interface unit may be any type of connector that enables the secure element to receive data transmitted by other devices. For instance, the message may be transmitted to the interface unit by a host processor (not shown) included in a communication device in which the secure element is also included. Furthermore, it is noted that the target secure element (i.e., the other secure element to which the profile is to be exported) may be included in the same communication device as the secure element from which the profile is exported. Alternatively, the two secure elements may be integrated into separate communication devices. Furthermore, it is noted that, although the storage unit 102, interface unit 104 and processing unit 106 have been shown as separate units, some or all of them may be integrated into a single physical component. Finally, the skilled person will appreciate that the term "match" does not imply that the data which are compared with each other should always be exactly the same. Rather, in some implementations a predefined error margin may be taken into account when comparing these data, while in other implementations no error margin will be allowed.

In one or more embodiments, the message is a signed message, and the processing unit is further configured to verify whether the message has been validly signed, and to authorize the export of the profile to the target secure element if the message has been validly signed and the data included in said message matches with the export target information. In this way, an additional security layer is added, so that the risk that the profile is exposed to unauthorized parties is further reduced.

In one or more embodiments, the export target information contains an identifier of the target secure element. Using the identifier of a target secure element as export target information is particularly suitable for restricting the export of the profile to said target secure element. In one or more embodiments, the export target information contains a token provided by an owner of the profile. This results in a practical implementation of an export restriction to a specific target secure element. More specifically, by making this token available to the secure element as well as to the target secure element, the latter may prove to the former that it is authorized to receive the profile. In a further practical implementation, the token provided by the owner of the profile is a random number.

In one or more embodiments, the processing unit is further configured to delete the export target information from the storage unit. In this way, an additional security layer is added, in the sense that the export target information may not be retained in the storage unit longer than necessary. In one or more embodiments, the processing unit is further configured to generate an export package containing said profile if the export has been authorized. In this way, the profile may easily be exported to the target secure element. In one or more embodiments, the processing unit is further configured to generate feedback data indicative of a result of the export of the profile. In this way, the export of the profile may be monitored more easily. In a practical implementation, the secure element is an eUICC.

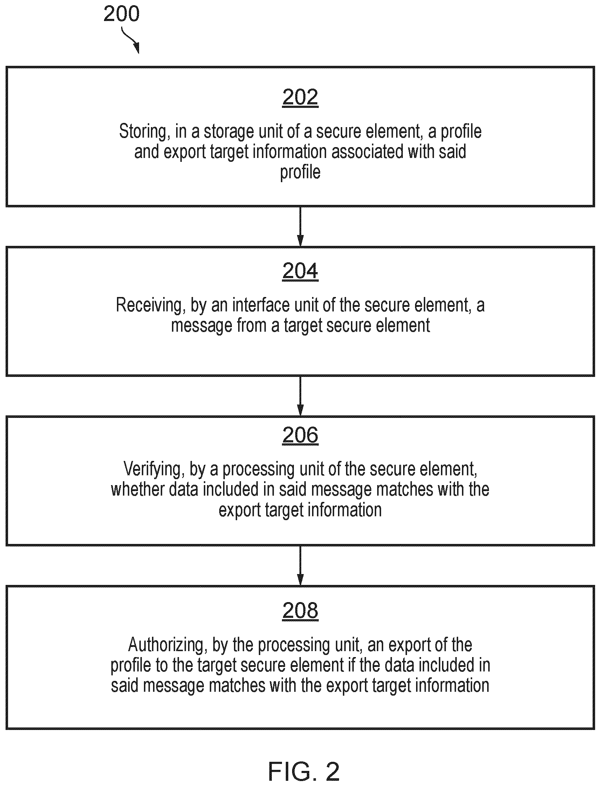

**Fig. 2** shows an illustrative embodiment of a method 200 of operating a secure element. The method 200 comprises the following steps. At 202, a profile and export target information associated with said profile are stored in a storage unit of a secure element. At 204, an interface unit of the secure element receives a message from a target secure element. Furthermore, at 206, a processing unit of the secure element verifies whether data included in said message matches with the export target information. Furthermore, at 208, the processing unit authorizes an export of the profile to the target secure element if the data included in said message matches with the export target information. The skilled person will appreciate that authorizing the export may be implemented in different ways. For instance, this may be done by releasing the profile from the storage unit and preparing an export package containing the profile. Subsequently, the processing unit may cause the interface unit to transmit the export package to the target secure element. These operations may be implemented or supported by software. The method 200 facilitates reducing the risk that the profile is exposed to unauthorized parties.

In order to allow a profile owner (e.g., an MNO) to have influence on the export function of a secure element (e.g., an eUICC), the profile owner may update a currently installed profile, respectively its meta-data, in a way that indicates the targeted secure element and/or device. These meta-data, referred to as export target information, may be evaluated by the exporting secure element on each profile export request which is issued. The export target information may be embodied as an identifier of the target secure element, which is proven and authenticated (e.g., via certificates and signatures) during the profile export process and made known to the profile owner at the start of the export process. The source secure element (i.e., the exporting secure element) may then check the validity and authenticity of the target secure element and only perform the profile export in case of a successful validation. Alternatively or in addition, the export target information may be embodied as an export token (e.g., a random number), which is set by the profile owner at the start of the export process within the meta-data of the profile that should be exported. This export token should also be made available and signed by the target secure element during the authentication process towards the source secure element. The source secure element may then check the validity and authenticity of the target secure element and the presented export token and only perform the profile export in case of a successful validation.

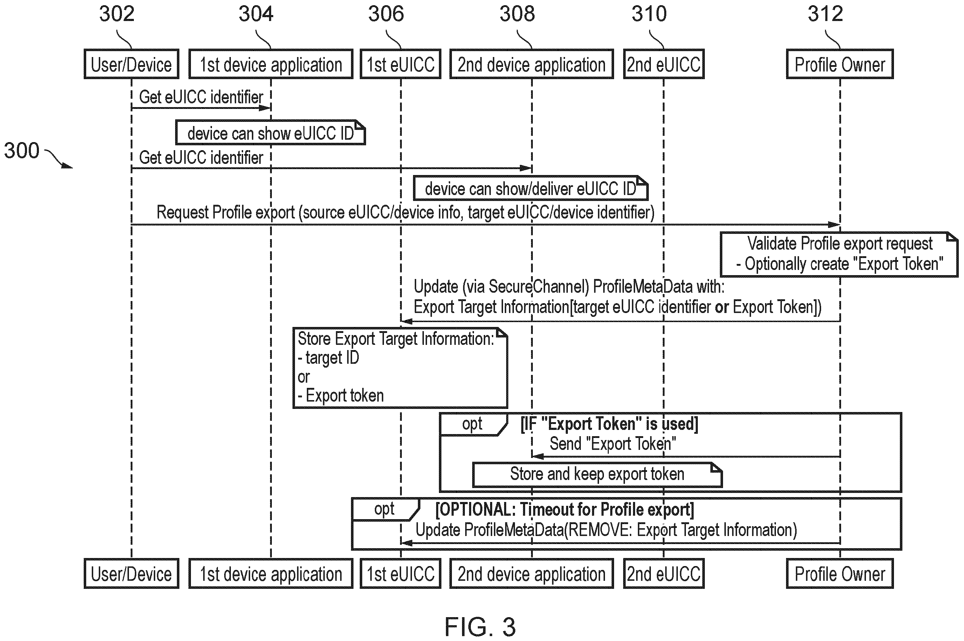

**Fig. 3** shows an illustrative embodiment of a provisioning process 300. In particular, it is shown how export target information may be provisioned to a first eUICC 306 (i.e., a source secure element), from which a profile should be exported to a second eUICC 310 (i.e., a target secure element). The profile owner 312 may be contacted during the profile export with information about the source secure element and the target secure element. This may be done automatically by a device change procedure in progress or manually by the user 302, e.g. by logging into the profile owner's web portal and requesting a profile export for a specific source secure element and target secure element. The profile owner 312 may perform additional sanity checks for profile export allowance depending on the received data. As specified in the *RSP Technical Specification,* version 2.5, published by the GSMA on 26 May 2023, the profile owner 312 may update, via an over-the-air (OTA) interface, the profile's meta-data with the export target information. The export target information may contain the identifier of the second eUICC 310 (e.g., the eUICC identifier or "EID") or a unique export taken (e.g., a random number). If the export token is used by the profile owner 312, then it should also be made available to the second eUICC 310, in order to be used during the export validation. Furthermore, the profile owner 312 may trigger a removal of the export target information after a certain period, for example in case no more feedback about the profile export is received by the profile owner 312. It is noted that the first device application 304 and second device application 308 are software components which may enable a host processor of the mobile device of the user 302 to interact with the first eUICC 306 and the second eUICC 310.

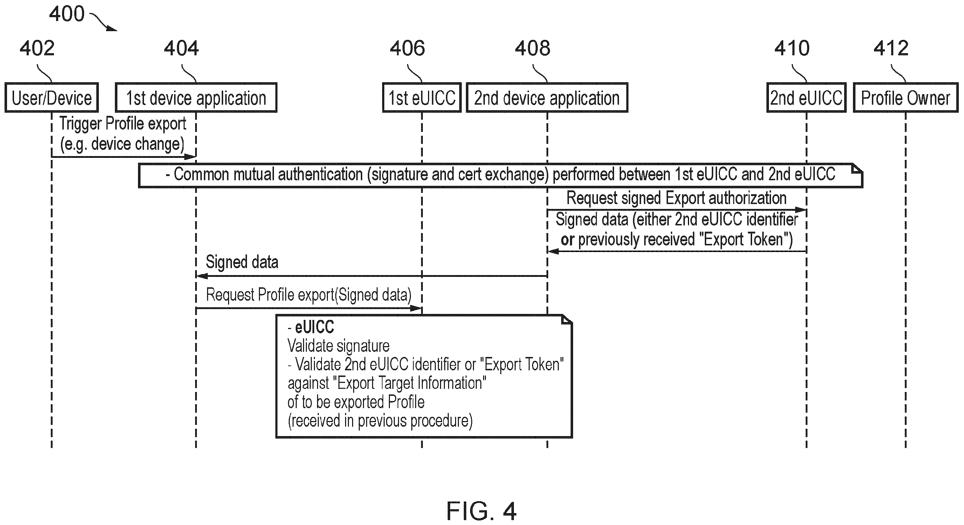

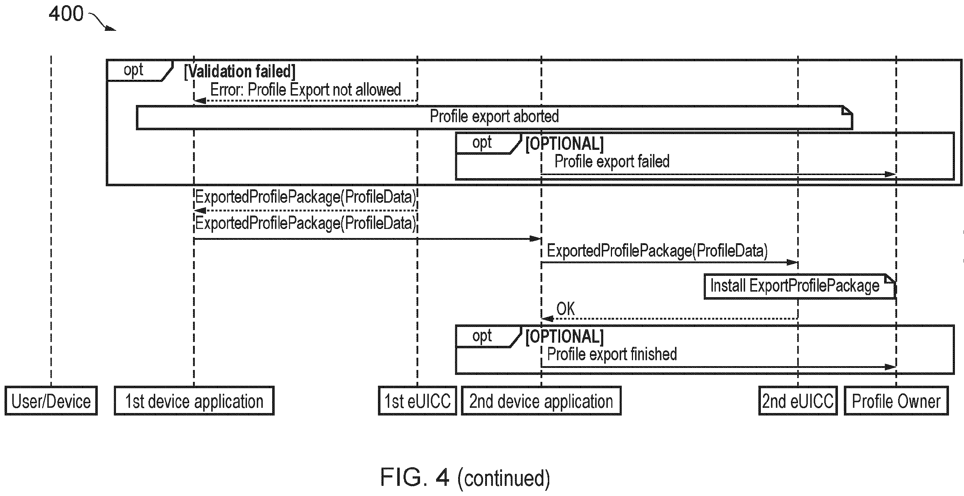

**Fig. 4** shows an illustrative embodiment of an export process 400. In particular, it is shown how the export target information provisioned as shown in Fig. 3, may be validated in order to securely export a profile. Upon an external trigger of the profile export the first eUICC 406 checks the export target information. More specifically, the second eUICC 410 may have to authenticate itself to the first eUICC 406. Then, the second eUICC 410 may validate an identifier of the second eUICC 410 (e.g., an EID stored in an eUICC certificate) or a signed export token. The identifier, respectively export token, may have been delivered to the first eUICC 406 during the authentication process. The first eUICC 406 may then check whether the identifier, respectively export token, matches with the export target information which was stored in its storage unit during the provisioning process. If the validations are successful, the first eUICC 406 authorizes the profile export and prepares and delivers the export package containing the profile. Subsequently, the export package may be installed on the second eUICC 410. Optionally, the profile owner 412 may be informed about the result of the export.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: secure element
- 102: storage unit
- 104: interface unit
- 106: processing unit
- 200: method of operating a secure element
- 202: storing, in a storage unit of a secure element, a profile and export target information associated with said profile
- 204: receiving, by an interface unit of the secure element, a message from a target secure element
- 206: verifying, by a processing unit of the secure element, whether data included in said message matches with the export target information
- 208: authorizing, by the processing unit, an export of the profile to the target secure element if the data included in said message matches with the export target information
- 300: provisioning process
- 302: user/device
- 304: first device application
- 306: first eUICC
- 308: second device application
- 310: second eUICC
- 312: profile owner
- 400: export process
- 402: user/device
- 404: first device application
- 406: first eUICC
- 408: second device application
- 410: second eUICC
- 412: profile owner

## Claims

1. A secure element, comprising:
a storage unit configured to store a profile and to store export target information associated with said profile;
an interface unit configured to receive a message from a target secure element;
a processing unit operatively coupled to the storage unit and the interface unit, wherein said processing unit is configured to:
verify whether data included in said message matches with the export target information;
authorize an export of the profile to the target secure element if the data included in said message matches with the export target information.

2. The secure element of claim 1, wherein said message is a signed message, and wherein the processing unit is further configured to:
verify whether the message has been validly signed;
authorize the export of the profile to the target secure element if the message has been validly signed and the data included in said message matches with the export target information.

3. The secure element of claim 1 or 2, wherein the export target information contains an identifier of the target secure element.

4. The secure element of any preceding claim, wherein the export target information contains a token provided by an owner of the profile.

5. The secure element of claim 4, wherein said token provided by the owner of the profile is a random number.

6. The secure element of any preceding claim, wherein the processing unit is further configured to delete the export target information from the storage unit.

7. The secure element of any preceding claim, wherein the processing unit is further configured to generate an export package containing said profile if the export has been authorized.

8. The secure element of any preceding claim, wherein the processing unit is further configured to generate feedback data indicative of a result of the export of the profile.

9. The secure element of any preceding claim, being an embedded universal integrated circuit card, eUICC.

10. A mobile communication device comprising the secure element of any preceding claim.

11. The mobile communication device of claim 10, further comprising the target secure element.

12. A method of operating a secure element, comprising:
storing, in a storage unit of the secure element, a profile and export target information associated with said profile;
receiving, by an interface unit of the secure element, a message from a target secure element;
verifying, by a processing unit of the secure element, whether data included in said message matches with the export target information;
authorizing, by the processing unit, an export of the profile to the target secure element if the data included in said message matches with the export target information.

13. The method of claim 12, further comprising:
verifying, by the processing unit, whether the message has been validly signed;
authorizing, by the processing unit, the export of the profile to the target secure element if the message has been validly signed and the data included in said message matches with the export target information.

14. The method of claim 12 or 13, wherein the export target information contains an identifier of the target secure element or a token provided by an owner of the profile.

15. A computer program comprising executable instructions which, when executed by a secure element, cause said secure element to carry out the method of any one of claims 12 to 14.

## Amended claims

### Amended claims in accordance with Rule 137(2) EPC.

1. A secure element, comprising:
a storage unit configured to store a profile and to store export target information associated with said profile, wherein the export target information contains an identifier of a target secure element and a token provided by an owner of the profile;
an interface unit configured to receive a message from the target secure element;
a processing unit operatively coupled to the storage unit and the interface unit, wherein said processing unit is configured to:
verify whether data included in said message matches with the export target information;
authorize an export of the profile to the target secure element if the data included in said message matches with the export target information, wherein said message is a signed message, and wherein the processing unit is further configured to:
verify whether the message has been validly signed;
authorize the export of the profile to the target secure element if the message has been validly signed and the data included in said message matches with the export target information.

2. The secure element of claim 1, wherein said token provided by the owner of the profile is a random number.

3. The secure element of any preceding claim, wherein the processing unit is further configured to delete the export target information from the storage unit.

4. The secure element of any preceding claim, wherein the processing unit is further configured to generate an export package containing said profile if the export has been authorized.

5. The secure element of any preceding claim, wherein the processing unit is further configured to generate feedback data indicative of a result of the export of the profile.

6. The secure element of any preceding claim, being an embedded universal integrated circuit card, eUICC.

7. A mobile communication device comprising the secure element of any preceding claim.

8. The mobile communication device of claim 7, further comprising the target secure element.

9. A method of operating a secure element, comprising:
storing, in a storage unit of the secure element, a profile and export target information associated with said profile, wherein the export target information contains an identifier of a target secure element and a token provided by an owner of the profile;
receiving, by an interface unit of the secure element, a message from a target secure element;
verifying, by a processing unit of the secure element, whether data included in said message matches with the export target information;
authorizing, by the processing unit, an export of the profile to the target secure element if the data included in said message matches with the export target information, the method further comprising:
verifying, by the processing unit, whether the message has been validly signed;
authorizing, by the processing unit, the export of the profile to the target secure element if the message has been validly signed and the data included in said message matches with the export target information.

10. A computer program comprising executable instructions which, when executed by a secure element, cause said secure element to carry out the method of claim 9.
